# EUROPEAN PATENT SPECIFICATION

(11) **EP 0 376 531 B1**
(45) Date of publication and mention of the grant of the patent: **08.03.1995**
(21) Application number: 89312880.1
(22) Date of filing: 11.12.1989
(51) Int. Cl.: G11B 7/08

(54) **Objective lens driving devices**
Steuerungsgerät für Objektivlinse
Dispositif de commande pour lentille d'objectif

(30) Priority: 29.12.1988 JP 334904/88
(43) Date of publication of application: 04.07.1990
(73) Proprietor: SONY CORPORATION, Tokyo 141 (JP)
(72) Inventor: Ishida, Tomoyuki c/o Patents Division, Shinagawa-ku Tokyo 141 (JP); Kobayashi, Yuhei c/o Patents Division, Shinagawa-ku Tokyo 141 (JP)
(74) Representative: Thomas, Christopher Hugo

(56) References cited:
- EP-A- 0 178 077
- US-A- 3 960 443
- US-A- 4 653 856
- PATENT ABSTRACTS OF JAPAN, vol. 10, no. 260 (P-494)[2316], 5th September 1986 &JP-A-61-87 229
- PATENT ABSTRACTS OF JAPAN, vol. 10, no. 215 (P-481)[2271], 26th July 1986 & JP-A-61-54 047
- PATENT ABSTRACTS OF JAPAN, vol. 10, no. 127 (P-455)[2184], 13th May 1986 & JP-A-60-253 030

## Description

This invention relates to objective lens driving devices employed in an optical pick-up device of a recording and/or reproducing apparatus for an optical disc for recording and/or reproducing data signals on or from an optical disc.

In a known optical pick-up device, a light beam emitted from a built-in light source such as a semiconductor laser element is converged by an objective lens and other optical devices such as a collimator lens or a beam splitter on a signal recording surface of an optical disc, and the light beam reflected by the recording surface is detected by a photo-detector to reproduce the data signals previously recorded on the optical disc, or data signals are recorded by converging a light beam on the recording surface.

With this type of optical pick-up device, the objective lens is movable in two directions orthogonal to each other, that is, in a direction along the optical axis i.e. a focusing direction, and in a direction orthogonal to the optical axis i.e. a tracking direction.

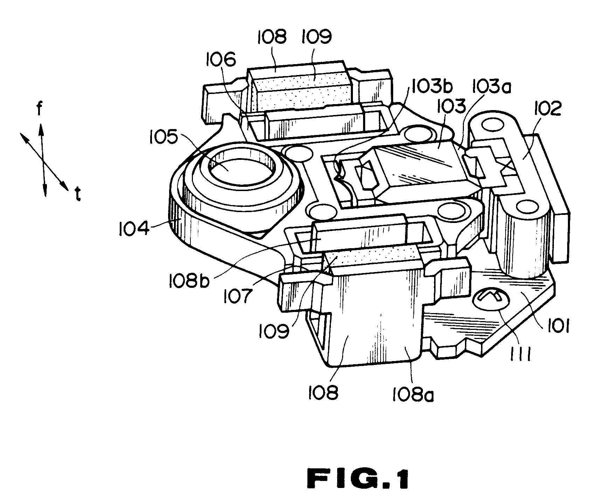

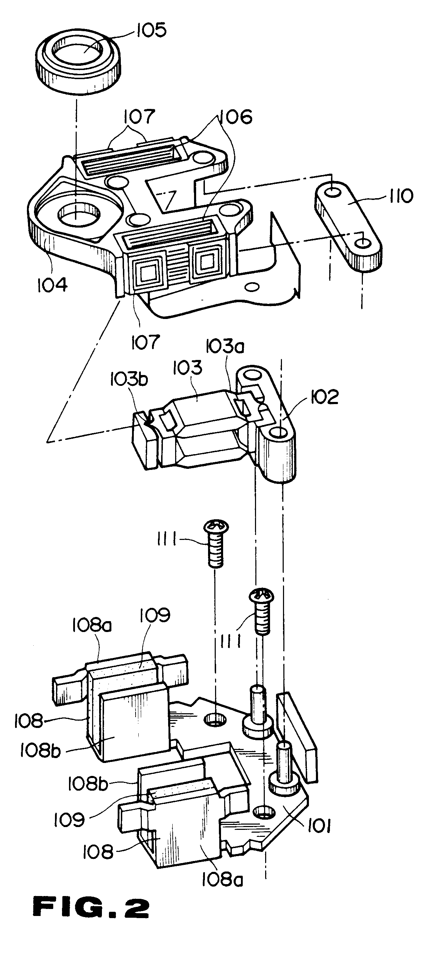

Referring to Figures 1 and 2, an objective lens driving unit has a lens bobbin 104 supported by a supporting member 102 mounted on a base plate 101 by means of a lens bobbin supporting arm 103. The supporting arm 103 is formed of a resilient material, such as a synthetic resin, and is formed with first and second hinges 103a and 103b of reduced thicknesses arranged at right angles to each other. Thus the lens bobbin 104 can be displaced or deflected in two directions, that is, in the focusing direction f and in the tracking direction t, both shown in Figure 1, by the supporting arm 103 being resiliently deformed at the hinges 103a and 103b.

To the lens bobbin 104 are attached an objective lens 105. a pair of focusing coils 106, and a pair of tracking coils 107 on the outer periphery of the focusing coils 106.

The coils 106 and 107 are confronted by a pair of magnetic yokes 108 mounted on the base plate 101, and a pair of magnets 109 mounted on the yokes 108. Each of the yokes 108 is formed by a pair of upstanding segments 108a and 108b arranged as a U-shaped element, and the magnet 109 is attached to the inner lateral side of one segment 108a while the other segment 108b is introduced into the associated focusing coil 106 in the form of a hollow rectangular member. Each magnet 109 is confronted by the associated tracking coil 107 which is wound in the form of a flat plate and placed on the outer periphery of the associated coil 106.

The coils 106 and 107, the yokes 108 and the magnets 109 make up a magnetic circuit, and the driving electric current is supplied to the coils 106 and 107 to drive the lens bobbin 104 in the above two directions.

A balancer 110 is mounted on the lens bobbin 104 on the side opposite to the objective lens 105 with respect to the second hinge 103b, so that the position of the centre of gravity of the movable parts including the lens bobbin 104, the objective lens 105 and the coils 106 and 107 is brought into register with the hinge 103b, to enable optimum driving of the lens bobbin 104 in the two directions.

With this optical pick-up device, the objective lens 105 is driven on the basis of output signals of the photo-detector, to perform the focusing and tracking servo control operations.

The function of the focusing servo control is to cause the light beam irradiated on the signal recording surface to be converged accurately on the recording surface at all times, even in cases wherein the optical disc does not rotate in a prescribed plane, but undulates. Thus, as long as the focusing servo is in operation, the objective lens 105 is driven so that the distance between it and the optical disc is always maintained at a predetermined value.

On the other hand, the function of the tracking servo is to cause the beam spot formed by the convergence of the optical beam to trace accurately the recording track formed on the recording surface, even when the optical disc is rotated eccentrically.

As the objective lens supporting member is supporting it so that it can be deviated in the focusing and the tracking directions, there have been proposed a supporting arm section composed of four round bars, as disclosed in our Japanese laid open Utility Model JP-U-01-24524, and a system including a supporting arm section formed by two sets of parallel spring plates arranged at right angles to each other with a lens bobbin mounting an objective lens and deviatably supported by the supporting arm section.

However, difficulties occur in the lens driving device using the four supporting arms composed of round bars, as shown in our Japanese laid open Utility Model JP-U-01-24524 in connection with manufacture and assembling, because each supporting arm needs to be attached to the lens bobbin supporting the objective lens.

Also a jumper wire needs to be provided between the lens bobbin and some stationary part, in order to supply the driving current to the tracking coil and the focusing coil provided in the lens bobbin. This jumper wire needs to be formed by an extremely thin wire, such as a litz wire, which is sufficiently flexible to be displaced to follow the lens bobbin without excessive load application during movement of the objective lens. Since this litz wire is thin and has only limited mechanical strength, it needs to be handled with care, so difficulties arise in the wire connecting operation.

Hence, in Japanese patent specification JP-A-1-37733, it is proposed that the supporting arm be formed by two sets of parallel spring plates constituted as a printed circuit board and arranged in directions at right angles to each other.

However, in this case, it becomes necessary to provide an intermediate pillar portion interconnecting a first spring plate displacing the objective lens in the longitudinal or focusing direction, and a second spring plate displacing the objective lens in the transverse or tracking direction, so that the weight of the device is increased, and hence the device may be subjected to vibrations due to partial resonance additional to those at the resonant frequency which is determined by the weight of the supporting arm and the movable parts. The vibrations due to partial resonance frequently prove to be harmful resonant vibrations affecting the biaxial driving of the supporting arm.

On the other hand, when driving the lens bobbin in the focusing direction and/or tracking direction, it is desirable that the first or the second spring plate be displaced only in a direction normal to the other spring plate. However, in practice, partial flexures or distortions are produced, such that the objective lens cannot be displaced responsive to the control driving current in the focusing and tracking directions with high response characteristics, and also harmful resonant vibrations are produced due to the partial flexure or distortions.

Moreover, with the objective lens driving device, shown in Figure 1, since the lens bobbin supporting arm 103 is formed of synthetic resin, the properties of the resin material may change with the prevailing temperature, so that the characteristics of the focusing servo or the tracking servo may be affected, so preventing stable focusing and tracking servo control operations. In addition, the thicknesses of the first and second hinges are difficult to control, and fluctuations in these thicknesses give rise to fluctuations in the spring constants of the hinges, so it is difficult to mass produce hinges with uniform properties.

Also, with the objective lens driving unit shown in Figures 1 and 2, the yokes 108, facing the lens bobbin, are formed by bending sheet metal into a U-shape and placing them on the base plate so that the magnets and the coils of the lens bobbin face each other. Since the electromagnetic force produced by the magnets on the yokes, and the servo current supplied to the focusing and tracking coils of the lens bobbin acts at a distance from a set screw 111 fastened to the base plate 100, the yokes 108 cannot be completely secured, so excess vibrations may occur in the yokes 108 due to the electromagnetic force. In particular, because the yokes 108 are upstanding and hence are free at the their ends, the segment 108b may vibrate as indicated by the broken lines in Figure 3.

These vibrations tend to affect the follow-up movement of the lens bobbin responsive to the servo signal, and result in focusing or tracking errors such that the recording and/or reproduction characteristics are impaired.

Japanese Patent Application JP-A-60253030, on which the classifying portion of appended claim 1 is based, discloses an objective lens driving device wherein two pairs of springs, each pair comprising two parallel plate springs disposed in planes at right angles to the planes in which the other pair are disposed, support an objective lens so that it is displaceable both in the direction of the optical axis and perpendicular thereto and current supplied to coils moves the objective lens against the action of the springs.

According to the invention there is provided an objective lens driving device employed in an optical pick-up device of a recording and/or reproducing apparatus for an optical disc, the device comprising:
pairs of plate spring members extending in planes at right angles to one another;
an objective lens bobbin in which an objective lens and driving coils are mounted and which is supported for deflection in a direction parallel to the optical axis of the objective lens and within a plane orthogonal to the optical axis of the objective lens; and
magnets supported within a magnetic yoke and mounted for facing the driving coils;
characterised in that the plate spring members comprise a rectangular frame shaped plate spring member, two parallel arms of which form a pair of supporting arm sections and two parallel arms of which form a pair of connecting plate sections interconnecting the ends of the supporting arm sections, with the rectangular frame-shaped plate member being bent at two positions through 90° so that the supporting arm sections lie in planes at right angles to the connecting plate sections, and the connecting plate sections are formed with resilient deflectable sections which may be resiliently deflected only in the direction normal to the deflection along the thickness of the supporting arm sections or in the direction of the thickness of the connecting plate sections.

Thus the magnetic yoke is formed by a rectangular frame and can be resiliently deflected only in two directions normal to each other by the supporting arm sections of the objective lens supporting member and the resilient deflectable sections of the connecting plate sections, so that focusing and tracking servo control can be applied to the objective lens in the focusing and tracking directions. By forming the lens supporting member as a single plate spring member, the overall resonant frequency can be made uniform to prevent the occurrence of vibrations due to partial resonance.

Also, the four sides of the magnetic yoke formed by a rectangular frame, can be secured strongly to one another with autonomous position regulation.

The invention will now be described by way of example with reference to the accompanying drawings, throughout which like parts are referred to by like parts, and in which:
Figure 1 is a perspective view showing a known objective lens driving device;
Figure 2 is an exploded perspective view of the device of Figure 1;

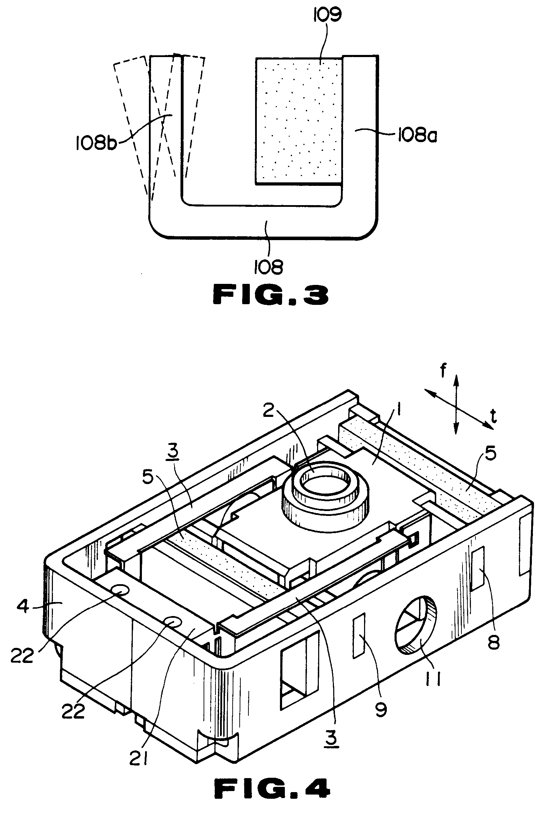

Figure 3 is an enlarged diagrammatic view showing vibrations of a magnetic yoke of the device of Figure 1;
Figure 4 is a perspective view of an embodiment of objective lens driving device according to the present invention;

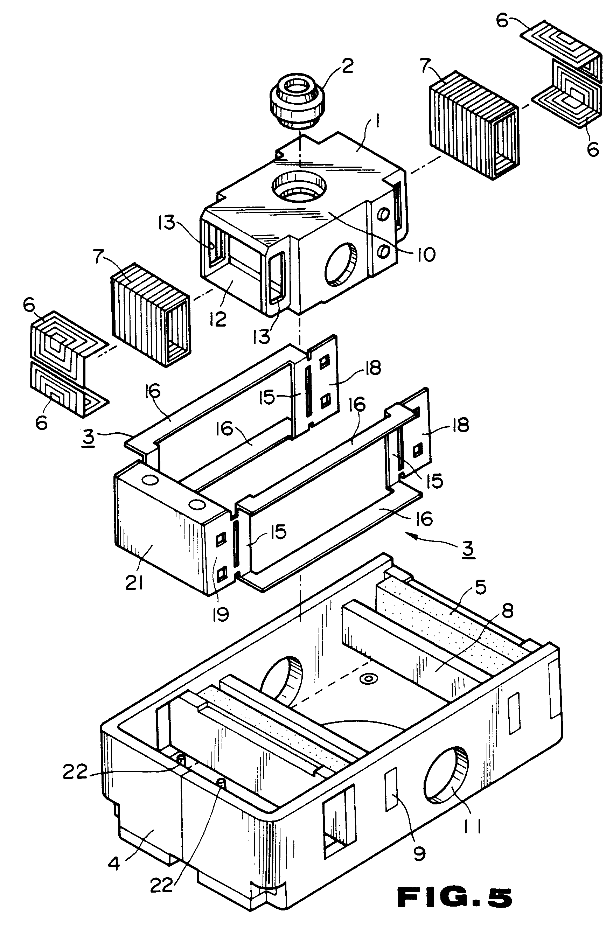

Figure 5 is an exploded perspective view of the embodiment;

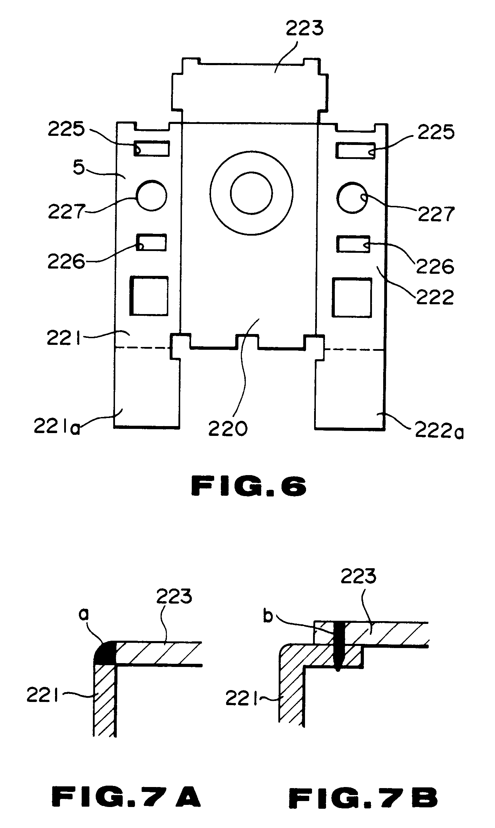

Figure 6 is a developed plan view of a magnetic yoke of the embodiment;
Figure 7 is a diagrammatic partial sectional view of the sides of the magnetic yoke;

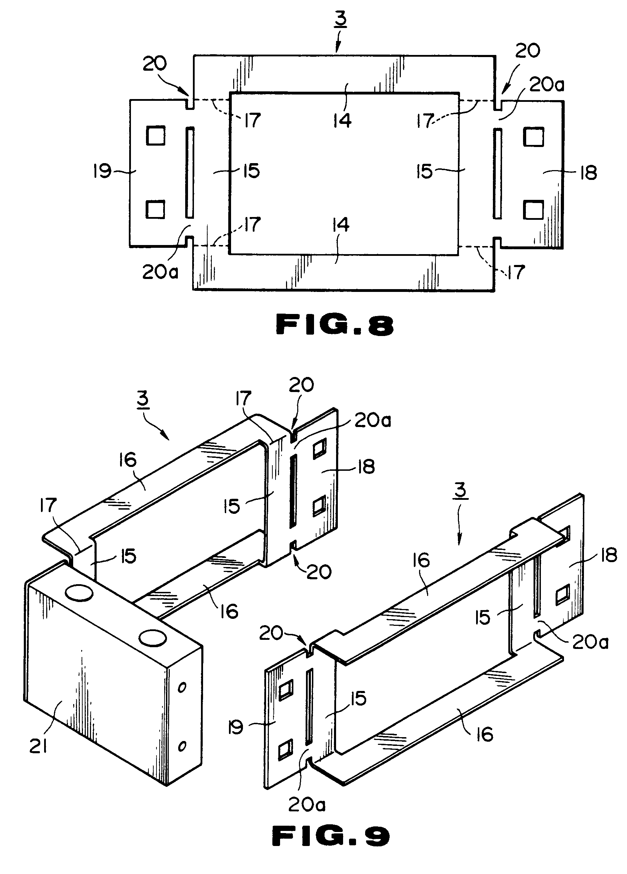

Figure 8 is a developed plan view showing an objective lens supporting member;
Figure 9 is an exploded perspective view of the sides of a pair of objective lens supporting members;

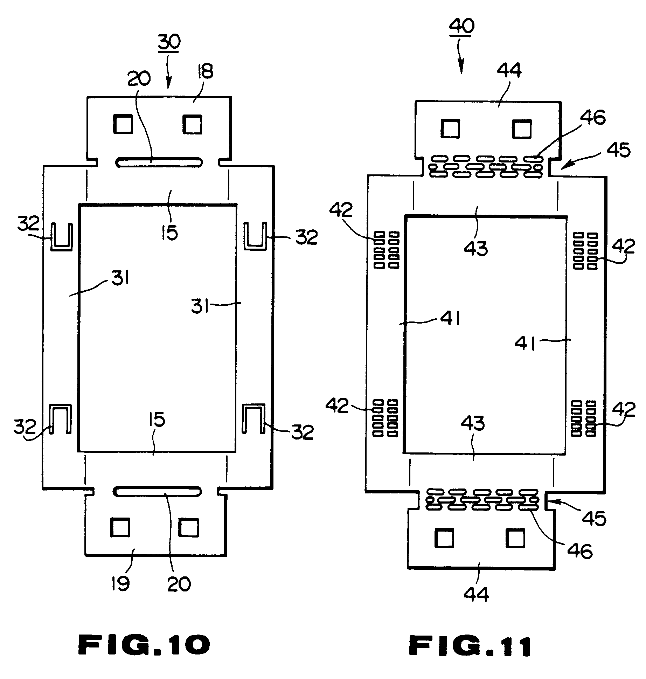

Figures 10 to 14 are developed plan views showing modifications of the objective lens supporting member; and

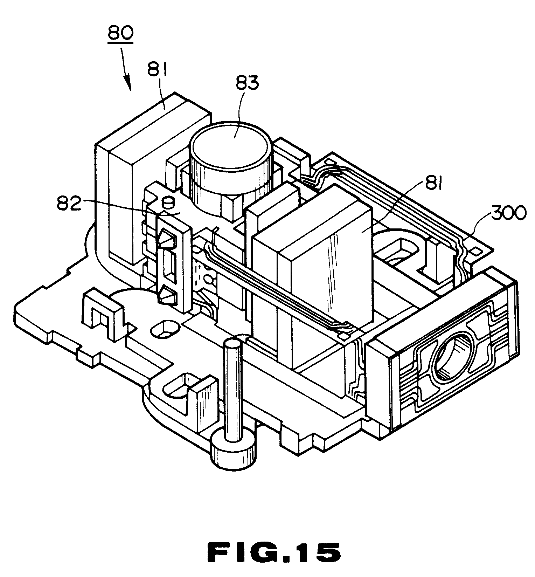

Figure 15 is a perspective view of a modified embodiment of objective lens driving device according to the present invention.

The embodiments of objective lens driving device of the present invention to be described are applied to an optical pick-up device, and are so designed and constructed that the light beam emitted by an optical block including a light source, such as a semiconductor laser element, a photosensor such as a photodiode and other optical devices is irradiated and converged on the signal recording surface of the optical recording medium, such as an optical disc.

Referring to Figures 4 and 5, the objective lens driving device includes an objective lens 2 supported by a lens bobbin 1, at least one spring plate 3 supporting the objective lens 2 for swinging movement, driving coils 6 and 7 mounted on the lens bobbin 1, magnets 5 mounted to face the driving coils 6 and 7, and a magnetic yoke 4 supporting the magnets 5.

The lens bobbin 1 is supported by the spring plate 3 within the yoke 4 arranged as a rectangular frame, so that the lens bobbin 1 faces the magnets 5 mounted within the yoke 4.

The yoke 4 accommodating the lens bobbin 1 is formed from a flat plate of high magnetic permeability as shown in Figure 6, wherein three flaps on the three sides of the sheet metal plate are bent into upright peripheral wall sections. Thus the yoke 4 is formed by a bottom plate 220, side plates 221 and 222, and a connecting plate 223, with the side plates 221 and 222 being bent with respect to the bottom plate 220 to form the side wall sections and lugs 221a and 222a of the side plates 221 and 222 being bent and connected to each other to form a rear side wall. The connecting plate 223 is also bent with respect to the bottom plate 220 to form the front wall. The side walls are connected to one another such as by welding to complete a rectangular frame. By forming the yoke 4 as a rectangular frame, the side walls are secured strongly to and reinforce one another to prevent vibrations from occurring at the free ends of the side walls. The side walls may be secured together such as by butt welding a (Figure 7A) or by spot welding b (Figure 7B). The four sides of the frame can thus be strongly unified to one another.

It suffices that the yoke be formed as a rectangular frame, so the bottom plate may occasionally be dispensed with. Thus a plurality of sheet metal sections may be united together, instead of bending a single metal sheet.

On the lens bobbin 1, the driving coils 6 and 7 comprise focusing coils 6 and tracking coils 7 for driving the objective lens 2 in the two directions. A magnetic circuit is defined together with the magnets 5 which are attached to the yoke 4 facing the lens bobbin 1. Thus the objective lens 2 may be driven biaxially within the yoke 4. A pair of inner yokes 8 and 9 are mounted on the yoke 4 for interconnecting the confronting side walls, and so as to be introduced into the tracking coils 7 for regulating the range of movement of the objective lens 2. The inner yokes 8 and 9 interconnect and reinforce the side walls of the yoke 4 more completely to prevent vibration at the free region of the side walls.

The objective lens 2 mounted on the lens bobbin 1 is so designed and constructed that the light beam emitted from the optical block is converged on the signal recording surface. The objective lens 2 is attached to the upper surface of the lens bobbin 1 formed of synthetic resin, with the light beam falling on the objective lens 2 after having been deflected by 90° by a mirror 10 mounted with the lens bobbin 1. The side walls of the yoke 4 are provided with central through-holes 11 for transmitting the light beam to the mirror 10.

Coil housing sections 12 are provided on both sides of the lens bobbin 1 perpendicular to the light beam deflection direction. The coil housing sections 12 are provided on both sides thereof with apertures 13 by which the tracking coils 7, into which the inner yokes 8 and 9 can be introduced, are introduced into the coil housing sections 12.

Thus the two tracking coils 7 are mounted on front and rear sides of the lens bobbin 1. The focusing coils 6 are mounted on the outer lateral sides of the tracking coils 7.

The spring plate 3, supporting the objective lens 2 for swinging movement in two directions at right angles to each other, is formed from a thin metal sheet, such as a stainless steel sheet and is formed by bending a single rectangular spring plate, as shown in Figure 8.

The spring plate 3, in the form of a rectangular frame, is formed by a pair of supporting plate sections 14 extending parallel to each other, and a pair of connecting plate portions 15 interconnecting the ends of the supporting plate sections 14. As shown in Figure 9, the supporting plate sections 14 are bent at 90° with respect to the connecting plate sections 15 to form upper and lower arm sections 16. The arm sections 16 function as plate springs in the longitudinal direction and can be resiliently deflected in the thickness direction. The folding section of the supporting plate sections 14 are weakened as at 17 to facilitate the bending.

On the outer sides of the connecting plate portions 15 are formed supporting segments or flaps 18 and 19 by means of resilient deflecting sections 20 which can be deflected only in the direction normal to the deflection in the direction of thickness of the arm sections 16, or in the thickness direction of the connecting plate portions 15.

The resilient deflecting sections 20 are formed by two connecting sections 20a of reduced width between the connecting plate portions 15 and the flaps 18 and 19, and are formed as hinges that can be deflected resiliently in the thickness direction of the connecting plate portions 15. The resilient deflecting sections 20 are provided at the connecting plate portions 15.

The flap 18 is connected to the lens bobbin 1 supporting the objective lens 2, while the flap 19 is connected to a supporting member 21. There is no limitation as to the type of connection of the flaps 18 and 19 to the lens bobbin 1 or to the supporting member 21, and any means capable of strongly securing the spring plate 3 to the lens bobbin 1 or to the supporting member 21, such as set screws or adhesives, may be employed.

The function of the supporting member 21 is to support the spring plate 3 within the yoke 4. The supporting member 21 is mounted by support shafts 22 provided in the yoke 4 to support the spring plate 3 within the yoke 4. The objective lens 2 can swing within the yoke 4 in two directions at right angles to each other by means of the supporting arm sections 16 formed by the supporting plate sections 14 of the spring plate 3, and by means of the resilient deflecting sections 20 provided in the connecting plate portions 15. In the present embodiment, one of the objective lens spring plates 3 is mounted on each side of the lens bobbin 1 to support the objective lens 2.

The focusing coils 6 of the lens bobbin 1 supported by the spring plates 3 face the magnets 5 within the yoke 4, while the inner yokes 8 and 9 are introduced into the tracking coils 7. The coils 6 and 7 , the magnets 5 and the yoke 4 make up the magnetic circuit.

When the focusing driving current is supplied to the focusing coils 6, with the objective lens 2 supported for swinging biaxially by the spring plates 3, the lens bobbin 1 is driven so as to be deflected along the optical axis of the objective lens 2 shown by an arrow f in Figure 4, that is, in the focusing direction. On the other hand, when the tracking drive current is supplied to the tracking coils 7, the lens bobbin 1 is driven so as to be deflected along the direction normal to the optical axis of the objective lens 2 shown by an arrow t in Figure 4, that is, in the tracking direction.

Despite the simplified structure of the above described spring plates 3, the objective lens 2 can be resiliently deflected along two directions by simply bending the supporting plate sections 14 of the spring plates in the form of a rectangular frame by 90° with respect to the connecting plate portions 15.

Each spring plate 3 is formed by bending a single spring plate of a homogeneous material, and is formed by the same component for the two directions, so that the resonant frequency becomes constant as a whole to prevent occurrence of harmful resonant vibrations. In particular, in the tracking direction, occurrence of resonant vibration in the resilient deflecting section 20 can be positively prevented because of the fine deformation points of the resilient deflecting sections 20.

On the other hand, with the above described spring plates 3, the arm sections 16 and the connecting plate portions 15 are deflected only in directions at right angles to each other. Thus the flexure or deflection can be prevented from occurring in driving the objective lens 2, so improving response characteristics.

Thus, by supplying the required driving current to the driving coils 6 and 7, the lens bobbin 1 can be driven to prescribed positions to perform focusing and tracking servo control operations reliably.

For supplying the current to the driving coils 6 and 7 for driving the objective lens 2 from the main body of the recording and/or reproducing apparatus, a flexible printed circuit board may be bonded to the surface of each spring plate 3. In this manner, the current can easily be supplied to the driving coils 6 and 7, while the force of the resilient deflection or the vibration attenuating characteristics of the arm sections 16 can also be adjusted by the flexible printed circuit board.

Further examples of spring plates will now be explained with reference to Figures 10 to 14.

A spring plate 30 constituting an objective lens supporting member, in the form of a rectangular frame, as shown in Figure 10, has supporting plate sections 31 formed with U-shaped slits 32.

The slits 32 function to adjust the force of resilient deflection of the supporting arm sections constituted by the supporting plate sections 31.

For maintaining the balanced state of the supporting arm sections, the slits 32 are preferably provided symmetrically in the two plate sections 31.

A spring plate 40 constituting an objective lens supporting member, in the form of a rectangular frame, as shown in Figure 11, has supporting plate sections 41 formed with a plurality of tiny slits 42 for adjusting the resistance to resilient deflection of the supporting arm sections constituted by the supporting plate sections 41.

The spring plate 40 in the form of a rectangular frame, shown in Figure 11, also has resilient deflecting sections 45 formed by a number of tiny slits 46, these resilient deflecting sections 45 functioning resiliently deflectably to connect the connecting plate sections 43 with the supporting sections 44 in a direction at right angles to the deflecting direction of the supporting arm sections formed by the supporting plate sections 41. The resistance to resilient deflection of the resilient deflecting sections 45 can be adjusted by forming the resilient deflecting sections in this manner by the tiny slits 46.

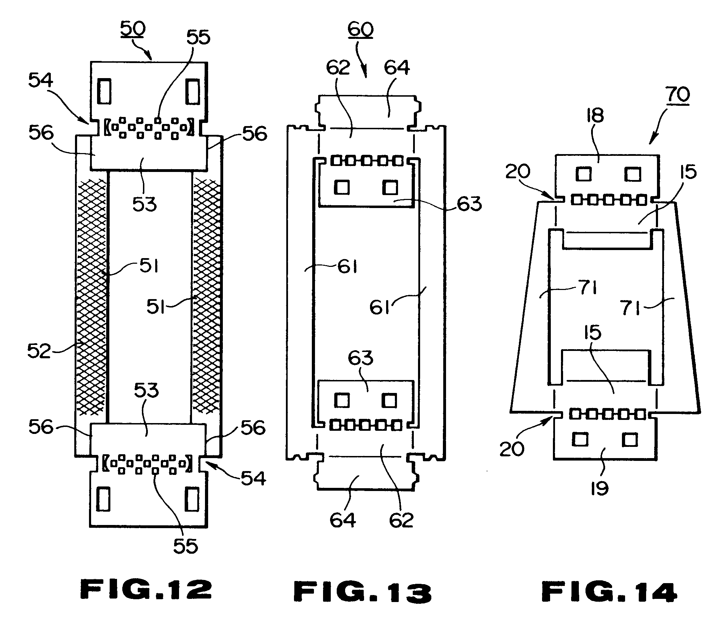

A spring plate 50 constituting the objective lens supporting member, shown in Figure 12, has the supporting plate sections 51 formed by mesh-like sections 52. The resistance to resilient deflection of the supporting arm sections constituted by the supporting plate sections 51 can also be adjusted by forming the supporting plate sections 51 as the meshed sections 52.

On the other hand, resilient deflecting sections 54, formed in the connecting plate sections 53, are formed with a large number of tiny slits 55.

Moreover, with the spring plate 50 in the form of the rectangular frame, shown in Figure 12, fold lines 56 along which the supporting plate sections 51 are bent to form the supporting arm sections are formed at the mid-positions along the widths of the supporting plate sections 51.

With the fold line 56 at the mid-position along the width of each of the supporting plate sections 51, the points of deflection at the resilient deflecting sections 54 of the connecting plate sections 53 and the centre-lines of the supporting arms constituted by the supporting plate sections 51 and 51 are aligned with one another to suppress further the vibrations due to partial resonance at the connecting points between the supporting arm sections and the connecting plate sections.

A spring plate 60 constituting an objective lens supporting member, in the form of a rectangular frame, is shown in Figure 13 and has supporting plate sections 61 extended longitudinally, and is provided with inner supporting segments 63 and outer reinforcements 64 with respect to connecting plate sections 62. The function of these reinforcements 64 is to reinforce the ends of the supporting arms to suppress further the distortions or strain of the supporting arms by being connected to the ends of the supporting arm sections constituted by the supporting plate sections 61. If the distortion or strain of the supporting arms can be prevented from occurring in this manner, the supporting arms can be resiliently deflected only in a direction orthogonal to the connecting plate sections 62 to improve further the response characteristics of the objective lens supporting member constituted by the spring plate 60 in the form of a rectangular frame.

A spring plate 70 in the form of a rectangular frame, shown in Figure 14, has supporting plate sections 71 of different widths at the one and the other ends of the supporting plate sections 71. The resilient deflective force of the supporting arms constituted by these supporting plate sections 71 can be adjusted in this manner by having the supporting plate sections 71 of differing widths at the one and the other ends.

The above described modifications of the objective lens supporting member may also be combined in any desired manner to provide various resilient deflecting forces as a function of the driving characteristics required of the objective lens.

The objective lens driving device according to the present invention is not limited to the above described embodiment in which the magnetic yoke 4 has the form of a rectangular frame and is provided with inner yokes 8 and 9. Thus the above described spring plate 3 may also be employed in an objective lens driving device 80 provided with a U-shaped upright magnetic yoke 81 as shown in Figure 15. In this case, there is no need to provide a light path bending mirror within the lens bobbin 82, but the outgoing light beam to the objective lens 83 may also be guided from below a lens bobbin 82.

In this figure there is shown an embodiment in which a printed wiring base plate 300 is stuck to the spring plate 3.

With embodiments of objective lens driving device according to the present invention, the objective lens can be resiliently deflected in two directions lying at right angles to each other by the supporting arm sections and the connecting plate sections of the spring plate supporting the objective lens. Focusing servo and tracking servo control operations in the focusing and tracking directions of the objective lens can be performed, while resonant vibrations are eliminated by the spring plates.

Resilient deflection of the objective lens in the above two directions may be realized by an extremely simple arrangement in which the supporting plate sections of the spring plates in the form of a rectangular frame are bent at 90°.

However, since each objective lens supporting member is formed only by the spring plate, the resonant frequency of the supporting member as a whole becomes constant to suppress the occurrence of harmful partial resonant vibrations at the time of driving. Above all, in the tracking direction, resonant vibrations in the resilient deflective sections can also be prevented from occurring due to finer points of deformation in these sections.

Thus the tracking and focusing servo control operations for the objective lens can be realized highly accurately to improve driving characteristics of the objective lens.

The magnetic yoke constituting the objective lens driving device is formed as a rectangular frame, which is strongly assembled with autonomous position regulation of the four sides of the frame.

Consequently, with the objective lens driving device according to the present invention, wasteful vibrations of the yokes can be prevented from occurring when the current is supplied to the coils during driving of the lens bobbin. Thus the tracking servo and focusing servo control of the lens bobbin may be performed highly accurately.

Also, in the tracking servo and focusing servo, the driving characteristics of the objective lens can be improved without be affected by the other members.

In addition, with embodiments of the objective lens driving device, the vibratable members, including the objective lens, are arranged within the protection of the yoke to avoid possible damage.

## Claims

1. An objective lens driving device employed in an optical pick-up device of a recording and/or reproducing apparatus for an optical disc, the device comprising:
pairs of plate spring members (15,16) extending in planes at right angles to one another;
an objective lens bobbin (1) in which an objective lens (2) and driving coils (6, 7) are mounted and which is supported for deflection in a direction parallel to the optical axis of the objective lens (2) and within a plane orthogonal to the optical axis of the objective lens (2); and
magnets (5) supported within a magnetic yoke (4) and mounted for facing the driving coils (6, 7);
characterised in that the plate spring members comprise a rectangular frame shaped plate spring member (3,30,40,50,60,70), two parallel arms (16,31,41,51,61,71) of which form a pair of supporting arm sections and two parallel arms (15,43,53,63) of which form a pair of connecting plate sections interconnecting the ends of the supporting arm sections, with the rectangular frame-shaped plate member being bent at two positions through 90° so that the supporting arm sections lie in planes at right angles to the connecting plate sections, and the connecting plate sections are formed with resilient deflectable sections (20,45,54) which may be resiliently deflected only in the direction normal to the deflection along the thickness of the supporting arm sections (16,31,41,51,61,71)) or in the direction of the thickness of the connecting plate sections (15,43,53,63).

2. A device according to claim 1, wherein there are provided a pair of the rectangular frame shaped plate spring members (3,30,40,50,60,70).

3. A device according to claim 2, wherein supporting pieces (18,19,44,64) are provided on the other sides of the connecting plate sections (15) to the supporting arm sections (16) so as to be deflected only in the direction normal to the deflection in the direction of the thickness of the supporting arm sections or in the direction of the thickness of the connecting plate sections.

4. A device according to claim 1, wherein said resilient deflecting sections (20) are formed by a plurality of connecting sections (20a).

5. A device according to claim 1 wherein said resilient deflecting sections (45) are formed with a plurality of tiny slits (46).

6. A device according to claim 2, wherein the supporting arm sections (31,41,51) are provided with adjustment means (32,42,52) for adjusting the resistance to resilient deflection.

7. A device according to claim 6, wherein the adjustment means are in the form of U-shaped slits (32).

8. A device according to claim 6, wherein the adjustment means comprise a plurality of tiny slits (42).

9. A device according to claim 6, wherein the adjustment means comprise mesh sections (52).

10. A device according to claim 2, wherein the supporting arm sections (70) are of different widths at one and the other ends.

11. A device according to claim 1, wherein supporting pieces (63) are provided on the inner sides of the connecting plate sections (62) by means of said resilient deflecting sections so as to be deflected only in the direction normal to the deflection in the direction of the thickness of the supporting arm sections (61) or in the direction of the thickness of the connecting plate sections (62) and wherein reinforcements (64) are provided on the outer sides of the connecting plate sections (62) to be connected to both ends of said supporting arm sections (61).

12. A device according to claim 1, wherein a printed wiring board (300) is stuck to said plate spring member (3).

## Patentansprüche

1. Objektivlinsen-Steuereinrichtung für eine optische Abtasteinrichtung eines Aufzeichnungs- und/oder Wiedergabegeräts für eine optische Platte, beispielsweise eine Video-Langspielplatte, bestehend aus:
Blattfederteilpaaren (15, 16), die sich in im rechten Winkel zueinander stehenden Ebenen erstrecken,
einem Objektivlinsen-Spulen-Trägerkörper (1), in welchem eine Objektivlinse (2) und Steuerspulen (6, 7) angeordnet sind und der in einer zur optischen Achse der Objektivlinse (2) parallelen Richtung und in einer zur optischen Achse der Objektivlinse (2) orthogonalen Ebene auslenkbar gehaltert ist, und
Magneten (5), die in einem Magnetjoch (4) den Steuerspulen (6, 7) zugekehrt gehaltert sind,
**dadurch gekennzeichnet,**
daß die Blattfederteile ein rechteckiges rahmenförmiges Blattfederteil (3, 30, 40, 50, 60, 70) aufweisen, wobei zwei parallele Arme (16, 31, 41, 51, 61, 71) davon ein Paar Haltearmabschnitte bilden und wobei zwei parallele Arme (15, 43, 53, 63) davon ein die Enden der Haltearmabschnitte miteinander verbindendes Paar Verbindungsblattabschnitte bilden, wobei das rechteckige rahmenförmige Blattfederteil an zwei Stellen derart um 90° gebogen ist, daß die Haltearmabschnitte in im rechten Winkel zu den Verbindungsblattabschnitten stehenden Ebenen liegen, und wobei die Verbindungsblattabschnitte elastisch auslenkbare Abschnitte (20, 45, 54) aufweisen, die nur in Richtung normal zur Auslenkung längs der Dicke der Haltearmabschnitte (16, 31, 41, 51, 61, 71) oder in Richtung der Dicke der Verbindungsblattabschnitte (15, 43, 53, 63) elastisch auslenkbar sind.

2. Einrichtung nach Anspruch 1, wobei ein Paar von rechteckigen rahmenförmigen Blattfederteilen (3, 30, 40, 50, 60, 70) vorgesehen ist.

3. Einrichtung nach Anspruch 2, wobei auf den von den Haltearmabschnitten (16) abgekehrten Seiten der Verbindungsblattabschnitte (15) Haltestücke (18, 19, 44, 64) derart vorgesehen sind, daß sie nur in Richtung normal zur Auslenkung in Richtung der Dicke der Haltearmabschnitte oder in Richtung der Dicke der Verbindungsblattabschnitte auslenkbar sind.

4. Einrichtung nach Anspruch 1, wobei die elastischen Auslenkungsabschnitte (20) durch mehrere Verbindungsabschnitte (20a) gebildet sind.

5. Einrichtung nach Anspruch 1, wobei die elastischen Auslenkungsabschnitte (45) mehrere kleine Schlitze (46) aufweisen.

6. Einrichtung nach Anspruch 2, wobei die Haltearmabschnitte (31, 41, 51) Einstelleinrichtungen (32, 42, 52) zur Einstellung einer Widerstandskraft gegen die elastische Auslenkung aufweist.

7. Einrichtung nach Anspruch 6, wobei die Einstelleinrichtung in Form von U-förmigen Schlitzen (32) vorliegt.

8. Einrichtung nach Anspruch 6, wobei die Einstelleinrichtung mehrere kleine Schlitze (42) aufweist.

9. Einrichtung nach Anspruch 6, wobei die Einstelleinrichtung gitterförmige Abschnitte (52) aufweist.

10. Einrichtung nach Anspruch 2, wobei die Haltearmabschnitte (70) an den zwei verschiedenen Enden unterschiedliche Breiten aufweisen.

11. Einrichtung nach Anspruch 1, wobei an den Innenseiten der Verbindungsblattabschnitte (62) mittels der elastischen Auslenkungsabschnitte Haltestücke (63) derart vorgesehen sind, daß sie nur in Richtung normal zur Auslenkung in Richtung der Dicke der Haltearmabschnitte (61) oder in Richtung der Dicke der Verbindungsblattabschnitte (62) auslenkbar sind, und wobei an den Außenseiten der Verbindungsblattabschnitte (62) Verstärkungen (64) vorgesehen sind, die mit beiden Enden der Haltearmabschnitte (61) zu verbinden sind.

12. Einrichtung nach Anspruch 1, wobei auf dem Blattfederteil (3) eine gedruckte Verdrahtungsplatte (300) angeordnet ist.

## Revendications

1. Dispositif de commande de lentille d'objectif utilisé dans un dispositif de capteur optique d'un appareil d'enregistrement et/ou de reproduction pour un disque optique, le dispositif comprenant :
des paires d'éléments de ressort de plaque (15, 16) s'étendant dans des plans à angles droits les uns par rapport aux autres ;
une bobine pour lentille d'objectif (1) dans laquelle une lentille d'objectif (2) et des bobines de commande (6, 7) sont montés et qui est maintenue pour une déflexion dans une direction parallèle à l'axe optique de la lentille d'objectif (2) et dans un plan orthogonal à l'axe optique de la lentille d'objectif (2) ; et
des aimants (5) maintenus dans une bobine de déflexion magnétique (4) et montés pour faire face aux bobines de commande (6, 7) ;
caractérisé en ce que les éléments de ressort de plaque comprennent un élément de ressort de plaque en forme de cadre rectangulaire (3, 30, 40, 50, 60, 70), dont deux bras parallèles (16, 31, 41, 51, 61, 71) forment une paire de parties de bras de support et dont deux bras parallèles (15, 43, 53, 63) forment une paire de parties de plaque de liaison interconnectant les extrémités des parties de bras de support, l'élément de plaque en forme de cadre rectangulaire étant plié sur deux positions à 90° de sorte que les parties de bras de support se trouvent dans des plans à angles droits par rapport aux parties de plaque de liaison, et les parties de plaque de liaison sont formées de parties élastiques pouvant être déviées (20, 45, 54) qui ne peuvent être déviées de manière élastique que dans la direction normale à la déflexion le long de l'épaisseur des parties de bras de support (16, 31, 41, 51, 61, 71) ou dans la direction de l'épaisseur des parties de plaques de liaison (15, 43, 53, 63).

2. Dispositif selon la revendication 1, dans lequel on fournit une paire d'éléments de ressort de plaque en forme de cadre rectangulaire (3, 30, 40, 50, 60, 70).

3. Dispositif selon la revendication 2, dans lequel des pièces de support (18, 19, 44, 64) sont fournies sur les autres côtés des parties de plaque de liaison (15) aux parties de bras de support (16) afin de n'être déviées que dans la direction normale à la déflexion dans la direction de l'épaisseur des parties de bras de support ou dans la direction de l'épaisseur des parties de plaque de liaison.

4. Dispositif selon la revendication 1, dans lequel lesdites parties de déflexion élastiques (20) sont formées par une pluralité de parties de liaison (20a).

5. Dispositif selon la revendication 1 dans lequel lesdites parties de déflexion élastiques (45) sont formées avec une pluralité de minuscules fentes (46).

6. Dispositif selon la revendication 2, dans lequel les parties de bras de support (31, 41, 51) sont pourvues de dispositifs de réglage (32, 42, 52) pour régler la résistance de la déflexion élastique.

7. Dispositif selon la revendication 6, dans lequel les dispositifs de réglage sont sous la forme de fentes en forme de U (32).

8. Dispositif selon la revendication 6, dans lequel les dispositifs de réglage comprennent une pluralité de minuscules fentes (42).

9. Dispositif selon la revendication 6, dans lequel les dispositifs de réglage comprennent des parties de maille (52).

10. Dispositif selon la revendication 2, dans lequel les parties de bras de support (70) sont de largeurs différentes à l'une et l'autre extrémité.

11. Dispositif selon la revendication 1, dans lequel les pièces de support (63) sont pourvues sur les faces internes des parties de plaque de liaison (62) au moyen desdites parties de déflexion élastiques afin de n'être déviées que dans la direction normale à la déflexion dans la direction de l'épaisseur des parties de bras de support (61) ou dans la direction de l'épaisseur des parties de plaque de liaison (62) et dans lequel des renforcements (64) sont fournis sur les faces extérieures des parties de plaque de liaison (62) pour être reliés aux deux extrémités desdites parties de bras de support (61).

12. Dispositif selon la revendication 1, dans lequel une carte de câblage imprimé (300) est fixée sur ledit élément de ressort de plaque (3).
